# EUROPÄISCHE PATENTSCHRIFT

(11) **EP 1 314 258 B1**
(45) Veröffentlichungstag und Bekanntmachung des Hinweises auf die Patenterteilung: **13.04.2005**
(21) Anmeldenummer: 01971644.8
(22) Anmeldetag: 23.08.2001
(51) Int. Cl.: H04B 1/38, H04M 1/02

(54) **SCHUTZHÜLLE**
PROTECTIVE COVER
ENVELOPPE PROTECTRICE

(30) Priorität: 31.08.2000 DE 10042946
(43) Veröffentlichungstag der Anmeldung: 28.05.2003
(73) Patentinhaber: SIEMENS AKTIENGESELLSCHAFT, 80333 München (DE)
(72) Erfinder: KUJAWSKI, Clemens, 81545 München (DE)
(86) Internationale Anmeldenummer: PCT/DE2001/003220
(87) Internationale Veröffentlichungsnummer: WO 2002/019665

(56) Entgegenhaltungen:
- WO-A-97/03511
- DE-U- 29 811 282
- US-A- 5 535 434
- US-A- 6 073 136

## Beschreibung

Die Erfindung betrifft eine Schutzhülle für ein mobiles Kommunikationsendgerät sowie ein Set, bestehend aus einem mobilen Kommunikationsendgerät und einer entsprechenden Schutzhülle.

Moderne mobile Kommunikationsendgeräte, insbesondere Mobilfunkgeräte, aber auch Pager oder ähnliche Geräte, erschließen dem Benutzer immer mehr multimediale Anwendungen wie beispielsweise Internet-Access oder SMS. Auf der anderen Seite sollen derartige mobile Geräte immer kleiner werden, wodurch zwangsläufig immer weniger Platz für die bei Multimedia-Anwendungen benötigten Ein- und Ausgabeeinheiten zur Verfügung steht. Um dieses Problem zu lösen, werden bisher entweder die Applikationen auf die Gegebenheiten des Kommunikationsendgeräts adaptiert. So wurde z. B. für den Internet-Zugriff mit Geräten mit nur kleinen Bildschirmen wie Mobilfunkgeräten der WAP-Standard entwickelt. Zum Teil wird versucht, das Problem durch geeignete Software zu lösen, in dem z. B. die Kommunikationsendgeräte mit einer veränderlichen kontextabhängigen Tastaturbelegung versehen werden. Ein Beispiel hierfür ist der sogenannte T9-Modus für einfache Eingabe alphanumerischer Zeichen mit einer numerischen Tastatur, der in modernen Geräten zur Eingabe von SMS-Nachrichten genutzt wird.

Weiterhin ist aus dem Stand der Technik gemäß dem US-Patent 6,073,136 ein Halter für ein Mobilfunkgerät bekannt, welcher weiterhin mit einem Touchscreen oder auch einer externen Computertastatur verbindbar ist.

Bei anderen Geräten wird das Problem einer zu kleinen Tastatur durch eine Klapptastatur am Gerät gelöst, was jedoch das Gerät relativ groß, schwer und für den normalen Gebrauch als Mobilfunkgerät unhandlich macht.

Es ist Aufgabe der vorliegenden Erfindung, eine Alternative zu diesem Stand der Technik zu schaffen.

Diese Aufgabe wird durch eine Schutzhülle für ein mobiles Kommunikationsendgerät bzw. durch ein Set, bestehend aus einem mobilen Kommunikationsendgerät und einer entsprechenden Schutzhülle, gelöst, bei der die Schutzhülle eine Ein- und/oder Ausgabeeinrichtung und eine Schnittstelle zum Übermitteln von Signalen zwischen der Ein- und/oder Ausgabeeinrichtung und dem mobilen Kommunikationsendgerät aufweist.

Bei dieser Schutzhülle kann es sich entweder um ein Etui, welches das Kommunikationsendgerät vollständig umschließt, oder auch um eine Abdeckung für die berührungsempfindlichen Teile des Kommunikationsendgeräts, insbesondere Tastatur und Display, handeln. Die Schutzhülle kann dabei beispielsweise als Hartschale, als weiche Schutzhülle oder auch gepolsterte Schutzhülle ausgestaltet sein.

Für viele Geräte ist bereits eine solche Schutzhülle vorgesehen. Diese Schutzhülle weist in der Regel große, völlig ungenutzte Flächen auf, auf denen relativ viel Platz für Ein- bzw. Ausgabeeinheiten zur Verfügung steht. Durch die erfindungsgemäße Integration von Ein- bzw. Ausgabeeinrichtungen in die Schutzhülle wird folglich kein bzw. nur minimal zusätzlicher Platz am Kommunikationsendgerät selbst benötigt. Die Kommunikationsendgeräte selbst werden nicht schwerer und sie lassen sich auch ohne die Schutzhülle wie bisher nutzen.

Dadurch bedingt, dass die Schutzhülle häufig eine Möglichkeit zur Befestigung, beispielsweise am Gürtel, aufweist, haben viele Benutzer die Schutzhülle sowieso immer dabei, sodass kein zusätzliches Gerät, wie z. B. ein Chat-Board mit herumgetragen werden muss.

Als Schnittstelle wird vorzugsweise eine Standard-Schnittstelle verwendet, die in nahezu allen Mobilfunkgeräten ohnehin schon vorhanden ist. Hierbei kann es sich im Prinzip um eine kurzreichweitige drahtlose Schnittstelle, beispielsweise eine Infrarot-Schnittstelle oder Bluetooth-Schnittstelle, handeln. Vorzugsweise wird jedoch eine Schnittstelle mit einer Steckverbindung zur Verbindung der Ein- und/oder Ausgabeeinrichtung mit dem mobilen Kommunikationsendgerät verwendet. Diese Steckverbindung wird vorzugsweise als Anschluss an einen Standard-Input-/Output-Ausgang des Mobilfunkgeräts, beispielsweise den sogenannten Extension Connector für ein Ladegerät oder eine Kfz-Freisprechanlage, ausgebildet. Durch diese Wahl der Schnittstelle lassen sich die Kommunikationsendgeräte wie bisher ohne Mehraufwand fertigen.

Über die Steckverbindung kann vorteilhafterweise auch die Stromversorgung der Ein- bzw. Ausgabeeinheiten in der Schutzhülle sichergestellt werden.

Bei einem bevorzugten Set aus Kommunikationsendgerät und Schutzhülle weist das Kommunikationsendgerät eine Steuereinrichtung auf, welche bei einer Verbindung des mobilen Kommunikationsendgeräts mit der Schnittstelle der Schutzhülle automatisch eine Anzeige auf einem Display des mobilen Kommunikationsendgeräts in eine gewünschte Orientierung bezüglich der Ein- und/oder Ausgabeeinrichtung der Schutzhülle ausrichtet. Das heißt, das Kommunikationsendgerät erkennt automatisch, wann eine Verbindung zu der Ein- und/oder Ausgabeeinrichtung der Schutzhülle existiert und diese Ein- und/oder Ausgabeeinrichtung folglich zur Verwendung bereitsteht. Dementsprechend wird die Anzeige auf dem Display so gedreht, dass beispielsweise für den Benutzer eine Tastatur der Schutzhülle und das Display des mobilen Kommunikationsendgeräts zueinander passend orientiert sind.

Bei einer weiteren bevorzugten Ausführungsvariante des Sets weist das mobile Kommunikationsendgerät auf einer Vorderseite ein erstes Display zur Verwendung mit einer integrierten Eingabeeinrichtung des mobilen Kommunikationsendgeräts auf. Auf der Rückseite befindet sich ein zweites Display zur Verwendung mit der Ein- und/oder Ausgabeeinrichtung der Schutzhülle. Hierbei handelt es sich sinnvollerweise um ein größeres Display, welches beispielsweise einen großen Teil der Rückseite abdeckt. Bei einer Verbindung des mobilen Kommunikationsendgeräts mit der Schnittstelle der Schutzhülle wird dann automatisch durch eine entsprechende Umschalteinrichtung im mobilen Kommunikationsendgerät vom ersten Display auf das zweite Display umgeschaltet, sodass beispielsweise bei einer Verwendung einer zusätzlichen großen Tastatur in der Schutzhülle ein entsprechend großes Display zur Verfügung steht.

Die Erfindung wird im Folgenden unter Hinweis auf die beigefügten Zeichnungen anhand von Ausführungsbeispielen näher erläutert. Die im Folgenden dargestellten Merkmale und die bereits oben beschriebenen Merkmale können nicht nur in den genannten Kombinationen, sondern auch einzeln oder in anderen Kombinationen erfindungswesentlich sein. Es stellen dar:
Figur 1 eine perspektivische Ansicht eines erfindungsgemäßen Sets gemäß einem ersten Ausführungsbeispiel, bestehend aus Mobilfunkgerät und einem Etui;
Figur 2 einen schematischen Längsschnitt durch ein erfindungsgemäßes Set gemäß einem zweiten Ausführungsbeispiel, bestehend aus einem Mobilfunkgerät und einer Abdeckung.

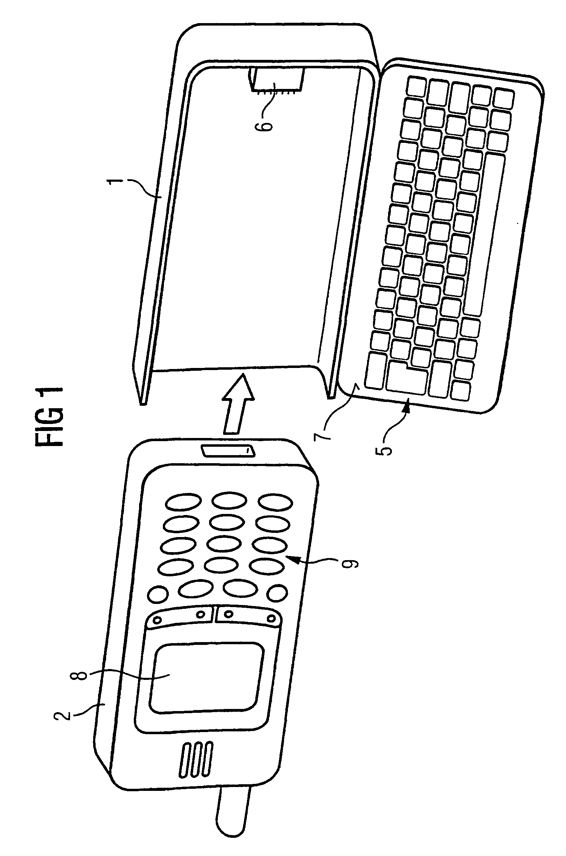

Bei dem Ausführungsbeispiel gemäß Figur 1 ist in der Innenseite des Deckels eines Etuis 1 eine alphanumerische Tastatur 5 zur bequemen Eingabe von beispielsweise Short Messages oder eMails integriert. Diese Tastatur kann entsprechend einer üblichen Tastatur aufgebaut sein und kann zusätzlich eine Cursorsteuerung, wie z.B. einen zwischen G-, H- und B-Taste angebrachten Joystick oder dergleichen aufweisen.

Die Schutzhülle ist für ein handelsübliches Mobilfunkgerät 2 mit dem üblichen Display 8 und einer üblichen Tastatur 9 vorgesehen.

Wie in Figur 1 dargestellt, wird das Mobilfunkgerät 2 in Pfeilrichtung in das Etui 1 eingesetzt. Dabei wird automatisch über eine Steckverbindung 6, welche in den sich an der üblichen Position untenseitig im Mobilfunkgerät 2 befindlichen Connector (z. B. einen sogenannten Extension Connector oder Lumberg-Connector, in Figur 1 nicht sichtbar) eingreift, eine galvanische Verbindung des Mobilfunkgeräts zur Tastatur 5 hergestellt. Über eine solche Steckverbindung kann im Prinzip auch die Stromversorgung der Tastatur 5 erfolgen. Die Steckverbindung 6 ist im Etui 1 fest integriert.

Bei einem besonders bevorzugten Ausführungsbeispiel befindet sich im Mobilfunkgerät 2 eine Steuereinrichtung, welche automatisch - bei eingeschaltetem Mobilfunkgerät - erkennt, wann das Mobilfunkgerät 2 sich im Etui 1 befindet bzw. wann die Steckverbindung 6 in den Connector eingesteckt ist. Sobald diese Verbindung zur Tastatur 5 erkannt ist, wird durch die Steuereinrichtung die Anzeige im Display 8 des Mobilfunkgeräts 2 automatisch so um 90° gedreht, sodass mit dem Mobilfunkgerät bequem auf der großen alphanumerischen Tastatur 5 eMails und Short Messages sowie andere beliebige Texte bearbeitet werden können. Eine solche Drehung bietet sich insbesondere bei sogenannten "Dot Matrix Displays" an.

Bei einer weiteren nicht dargestellten Variante dieses Ausführungsbeispiels befindet sich auf der Rückseite des Mobilfunkgeräts ein zweites großes Display. Das Mobilfunkgerät wird dann mit der Tastatur nach unten in das Etui eingesteckt. Beim Erkennen der Verbindung zwischen Mobilfunkgerät und Tastatur über die eingesteckte Steckverbindung wird durch eine entsprechende Umschalteinrichtung automatisch vom vorderen Display auf das rückseitige Display umgeschaltet, sodass dem Nutzer nicht nur eine komfortable Tastatur, sondern auch ein gut ablesbares Display mit großer Zeilenbreite zur Verfügung steht.

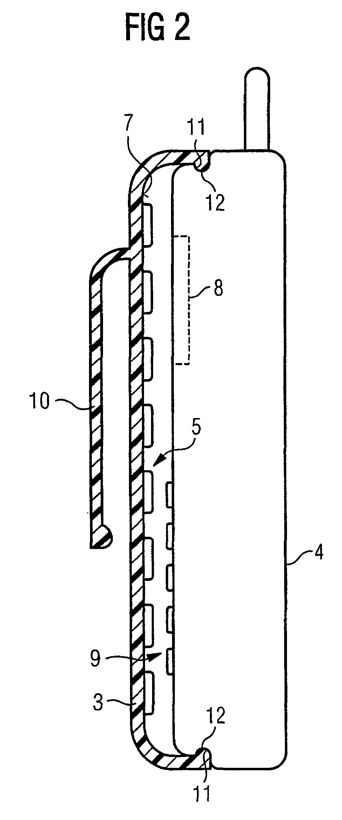

Figur 2 zeigt eine weitere einfache Variante, bei der das Set aus einem Mobilfunkgerät 4 und einer Schutzabdeckung 3 besteht. Die Schutzabdeckung 3 ist hier in Form einer zweiten Oberschale ausgebildet und überdeckt lediglich die Vorderseite des Mobilfunkgeräts 4 mit der Tastatur 9 und dem Display 8. Das Mobilfunkgerät 4 weist dazu am Rand der Vorderseite eine umlaufende Nut 12 auf, in die eine entsprechende Rastkante 11 der Schutzabdeckung 3 eingreift.

Auf der Innenseite 7 der Schutzabdeckung 3 befindet sich eine relativ große alphanumerische Tastatur 5. Auf der Außenseite ist an der Schutzabdeckung 3 ein Gürtelclip 10 angebracht.

Die Verbindung zwischen der Tastatur 5 in der Abdeckung 3 und dem Mobilfunkgerät 4 kann wieder über eine Steckverbindung, beispielsweise mit einem Kabel (nicht dargestellt), erfolgen. Prinzipiell kann jedoch auch an der Schutzabdeckung 3 an einer geeigneten Stelle außenseitig eine entsprechende Steckverbindung angeordnet sein, welche mit einem passenden Connector im Mobilfunkgerät 4 verbunden wird.

## Patentansprüche

1. Schutzhülle (1, 3) für ein mobiles Kommunikationsendgerät (2, 4) mit einer Ein- und/oder Ausgabeeinrichtung (5) und einer Schnittstelle zur Übermittlung von Signalen zwischen der Ein- und/oder Ausgabeeinrichtung (5) und dem mobilen Kommunikationsendgerät (2, 4),
**dadurch gekennzeichnet,**
**dass** die Ein- und/oder Ausgabeeinrichtung (5) auf einer im Verschlusszustand innenliegenden Seite (7) der Schutzhülle (1, 3) angeordnet ist.

2. Schutzhülle nach Anspruch 1, **gekennzeichnet durch** eine alphanumerische Tastatur (5).

3. Schutzhülle nach Anspruch 1 oder 2, **dadurch gekennzeichnet, dass** die Schnittstelle eine Steckverbindung (6) zur Verbindung der Ein- und/oder Ausgabeeinrichtung (5) mit dem mobilen Kommunikationsgerät aufweist (2, 4).

4. Schutzhülle nach Anspruch 3, **dadurch gekennzeichnet, dass** die Steckverbindung (6) zum Anschluss an einen Standard-Input/Output-Ausgang eines Mobilfunkgeräts (2, 4) ausgebildet ist.

5. Set bestehend aus einem mobilen Kommunikationsendgerät (2, 4) und einer Schutzhülle (1, 3) nach einem der vorstehenden Ansprüche.

6. Set nach Anspruch 5,
**dadurch gekennzeichnet,**
**dass** das mobile Kommunikationsendgerät eine Steuereinrichtung aufweist, welche bei einer Verbindung des mobilen Kommunikationsendgeräts mit der Schnittstelle der Schutzhülle automatisch eine Anzeige auf einem Display des mobilen Kommunikationsendgeräts in eine gewünschte Orientierung bezüglich der Ein- und/oder Ausgabeeinrichtung der Schutzhülle ausrichtet.

7. Set nach Anspruch 5 oder 6,
**dadurch gekennzeichnet,**
**dass** das mobile Kommunikationsendgerät auf einer Vorderseite ein erstes Display zur Verwendung mit einer integrierten Eingabeeinrichtung des mobilen Kommunikationsendgerät aufweist und auf einer Rückseite ein zweites Display zur Verwendung mit der Ein- und/oder Ausgabeeinrichtung der Schutzhülle aufweist.

8. Set nach Anspruch 7, **dadurch gekennzeichnet, dass** das mobile Kommunikationsendgerät eine Umschalteinrichtung aufweist, welche bei einer Verbindung des mobilen Kommunikationsendgeräts mit der Schnittstelle der Schutzhülle automatisch von dem ersten Display auf das zweite Display umschaltet.

## Claims

1. Protective casing (1, 3) for a mobile communication terminal (2, 4) having an input and/or output device (5) and an interface for transmitting signals between the input and/or output device (5) and the mobile communication terminal (2, 4),
**characterized in that** the input and/or output device (5) is arranged on a side (7) of the protective casing (1, 3) which is on the inside in the closed state.

2. Protective casing according to Claim 1, **characterized by** an alphanumeric keypad (5).

3. Protective casing according to Claim 1 or 2, **characterized in that** the interface has a plug connection (6) for connecting the input and/or output device (5) to the mobile communication appliance (2, 4).

4. Protective casing according to Claim 3, **characterized in that** the plug connection (6) is designed for connection to a standard input/output jack on a mobile radio (2, 4).

5. Set comprising a mobile communication terminal (2, 4) and a protective casing (1, 3) according to one of the preceding claims.

6. Set according to Claim 5, **characterized in that** the mobile communication terminal has a control device which, when the mobile communication terminal is connected to the protective casing's interface, automatically puts a displayed item on a display on the mobile communication terminal into a desired orientation with respect to the protective casing's input and/or output device.

7. Set, according to Claim 5 or 6, **characterized in that** the mobile communication terminal has, on a front side, a first display for use with an integrated input device on the mobile communication terminal and, on a rear side, a second display for use with the protective casing's input and/or output device.

8. Set according to Claim 7, **characterized in that** the mobile communication terminal has a changeover device which, when the mobile communication terminal is connected to the protective casing's interface, automatically changes over from the first display to the second display.

## Revendications

1. Enveloppe protectrice (1, 3) pour un terminal de communication mobile (2, 4) pourvu d'un dispositif d'entrée et/ou sortie (5) et d'une interface pour transmettre des signaux entre le dispositif d'entrée et/ou sortie (5) et le terminal de communication mobile (2, 4),
**caractérisée en ce**
**que** le dispositif d'entrée et/ou sortie (5) est situé sur un côté intérieur (7) de l'enveloppe protectrice (1) à l'état fermé.

2. Enveloppe protectrice selon la revendication 1, **caractérisée par** un clavier alphanumérique (5).

3. Enveloppe protectrice selon la revendication 1 ou 2, **caractérisée en ce que** l'interface comprend un connecteur à fiches (6) pour la connexion du dispositif d'entrée et/ou sortie (5) avec le terminal de communication mobile (2, 4).

4. Enveloppe protectrice selon la revendication 3, **caractérisée en ce que** le connecteur à fiches (6) est exécuté pour le raccord à une sortie E/S standard d'un téléphone mobile (2, 4).

5. Ensemble formé d'un terminal de communication mobile (2, 4) et d'une enveloppe protectrice (1, 3) selon l'une des revendications précédentes.

6. Ensemble selon la revendication 5,
**caractérisé en ce**
**que** le terminal de communication mobile est pourvu d'un dispositif de commande qui, lors d'une connexion du terminal de communication mobile avec l'interface de l'enveloppe protectrice, aligne automatiquement un affichage sur un écran du terminal de communication mobile dans une orientation souhaitée par rapport au dispositif d'entrée et/ou sortie de l'enveloppe protectrice.

7. Ensemble selon la revendication 5 ou 6,
**caractérisé en ce**
**que** le terminal de communication mobile est pourvu, sur un côté antérieur, d'un premier écran destiné à être utilisé avec un dispositif d'entrée intégré du terminal de communication mobile et, sur un côté postérieur, d'un second écran destiné à être utilisé avec le dispositif d'entrée et/ou sortie de l'enveloppe protectrice.

8. Ensemble selon la revendication 7, **caractérisé en ce que** le terminal de communication mobile est pourvu d'un dispositif de commutation qui, lors d'une connexion du terminal de communication mobile avec l'interface de l'enveloppe protectrice, procède automatiquement à la commutation du premier écran au second écran.
